(19) **Europäisches Patentamt**

**European Patent Office**

**Office européen des brevets**

(11) Veröffentlichungsnummer : **0 521 926 B1**

(12) # EUROPÄISCHE PATENTSCHRIFT

(45) Veröffentlichungstag der Patentschrift :
**12.01.94 Patentblatt 94/02**

(51) Int. Cl.$^5$ : **C08F 2/06,** C08F 265/04,
C09D 151/00, B05D 7/26

(21) Anmeldenummer : **91906273.7**

(22) Anmeldetag : **14.03.91**

(86) Internationale Anmeldenummer :
**PCT/EP91/00481**

(87) Internationale Veröffentlichungsnummer :
**WO 91/14712 03.10.91 Gazette 91/23**

(54) VERFAHREN ZUR HERSTELLUNG EINES MEHRSCHICHTIGEN ÜBERZUGS.

(30) Priorität : **28.03.90 DE 4009931**

(43) Veröffentlichungstag der Anmeldung :
**13.01.93 Patentblatt 93/02**

(45) Bekanntmachung des Hinweises auf die
Patenterteilung :
**12.01.94 Patentblatt 94/02**

(84) Benannte Vertragsstaaten :
**AT BE CH DE DK ES FR GB IT LI NL SE**

(56) Entgegenhaltungen :
**Chemical Abstracts, vol. 111, no. 22, 27 November 1989, (Columbus, Ohio, US), see pages 108, 109, abstract 196859q, & JP-A-0104665**

(73) Patentinhaber : **BASF Lacke + Farben AG**
**Glasuritstrasse 1**
**D-48165 Münster-Hiltrup (DE)**

(72) Erfinder : **SCHWARTE, Stephan**
**Richard-Wagner-Str. 6**
**D-4407 Emsdetten (DE)**
Erfinder : **DANGSCHAT, Manfred**
**Weitkamp 36**
**D-4406 Drensteinfurt 3 (DE)**
Erfinder : **REIMANN, Manfred**
**Heimstättenweg 12 b**
**D-4406 Drensteinfurt (DE)**
Erfinder : **WESTERMANN, Carlos**
**Von-Holte-Str. 107**
**D-4400 Münster (DE)**

(74) Vertreter : **Münch, Volker, Dr.**
**BASF Lacke + Farben AG**
**Patente/Lizenzen/Dokumentation Postfach 61 23**
**D-48136 Münster (DE)**

EP 0 521 926 B1

**Beschreibung**

Die Erfindung betrifft ein Verfahren zur Herstellung eines mehrschichtigen schützenden und/oder dekorativen Überzuges auf einer Substratoberfläche, bei dem

(1) eine pigmentierte Basisbeschichtungszusammensetzung auf die Substratoberfläche aufgebracht wird

(2) aus der in Stufe (1) aufgebrachten Zusammensetzung ein Polymerfilm gebildet wird

(3) auf die so erhaltene Basisschicht eine ein wasserverdünnbares Polyacrylatharz als Bindemittel und ein Aminoplastharz als Vernetzungsmittel enthaltende transparente wäßrige Deckbeschichtungszusammensetzung aufgebracht wird und anschließend

(4) die Basisschicht zusammen mit der Deckschicht eingebrannt wird.

Die Erfindung betrifft auch wäßrige Beschichtungszusammensetzungen, wasserverdünnbare Polyacrylatharze und ein Verfahren zur Herstellung von wasserverdünnbaren Polyacrylatharzen.

Das Verfahren gemäß Oberbegriff des Patentanspruchs 1 ist bekannt. Es wird insbesondere zur Herstellung von Automobil-Metalleffektlackierungen eingesetzt (vgl. z.B. US-PS-3,639,147, DE-A-33 33 072 und EP-A-38127).

Aus ökonomischen und ökologischen Gründen ist es wünschenswert, in Stufe (3) des oben beschriebenen sogenannten "base coat-clear coat"-Verfahrens wäßrige Deckbeschichtungszusammensetzungen einzusetzen.

Die Deckbeschichtungszusammensetzungen müssen mit Hilfe von automatischen Lackieranlagen durch Spritzen applizierbar sein. Dazu müssen sie bei Spritzviskosität einen so hohen Feststoffgehalt aufweisen, daß mit ein bis zwei Spritzgängen (Kreuzgängen) Lackfilme mit ausreichender Schichtdicke erhalten werden, und sie müssen eingebrannte Lackfilme liefern, die ein gutes Aussehen (guter Verlauf, hoher Glanz, guter Decklackstand...) zeigen.

Die in Beispiel 2 der EP-A-38127 offenbarte wäßrige Deckbeschichtungszusammensetzung erfüllt nicht alle oben genannten Forderungen.

Die der vorliegenden Erfindung zugrundeliegende Aufgabenstellung besteht in der Bereitstellung von wäßrigen Deckbeschichtungszusammensetzungen, die die oben genannten Forderungen erfüllen.

Diese Aufgabe wird überraschenderweise durch Deckbeschichtungszusammensetzungen erfüllt, die ein wasserverdünnbares Polyacrylatharz als Bindemittel enthalten, das erhältlich ist, indem

(I) ein Gemisch aus

(a1)   einem mit (a2), (a3), (b1) und (b2) copolymerisierbaren, im wesentlichen carboxylgruppenfreien (Meth)acrylsäureester oder einem Gemisch aus solchen (Meth)acrylsäureestern und

(a2)   einem mit (a1), (a3), (b1) und (b2) copolymerisierbaren ethylenisch ungesättigten Monomeren, das mindestens eine Hydroxylgruppe pro Molekül trägt und im wesentlichen carboxylgruppenfrei ist oder einem Gemisch aus solchen Monomeren und gegebenenfalls

(a3)   einem mit (a1), (a2), (b1) und (b2) copolymerisierbaren, im wesentlichen carboxylgruppenfreien, von (a1) und (a2) verschiedenen ethylenisch ungesättigten Monomeren oder einem Gemisch aus solchen Monomeren

zu einem organischen Lösemittel oder Lösemittelgemisch gegeben und in Gegenwart mindestens eines Polymerisationsinitiators polymerisiert wird und

(II) nachdem mindestens 80 Gew.-% des aus (a1), (a2) und gegebenenfalls (a3) bestehenden Gemisches zugegeben worden sind und nach dem mindestens 80 Gew.-% der in Stufe (i) zugebenen Monomere umgesetzt worden sind

(b1)   mehr als 25 bis weniger als 60, vorzugsweise 33 - 50 Gew.-% eines mindestens eine Carboxylgruppe pro Molekül tragenden, mit (a1), (a2), (a3) und (b2) copolymerisierbaren ethylenisch ungesättigten Monomeren oder eines Gemisches aus solchen Monomeren zusammen mit

(b2)   40 bis 75 Gew.-% eines carboxylgruppenfreien, mit (a1), (a2), (a3) und (b1) copolymerisierbaren ethylenisch ungesättigten Monomers oder eines Gemisches aus solchen Monomeren

zugegeben werden und weiterpolymerisiert wird und

(III) nach Beendigung der Polymerisation das erhaltene Polyacrylatharz zumindest teilweise neutralisiert und in Wasser dispergiert wird, wobei die Summe der Gewichtsanteile von (b1) und (b2) stets 100 Gew.-% ergibt und (a1), (a2), (a3), (b1) und (b2) in Art und Menge so ausgewählt werden, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40 °C bis +60 °C, vorzugsweise -20 °C bis +40 °C, aufweist.

In der JP-A-1,104,665 werden wäßrige Beschichtungszusammensetzungen beschrieben, die wasserverdünnbare Aminoplastharze und Polyacrylatharze enthalten, die hergestellt werden, indem Vinylmonomere, die Hydroxyl- oder N-alkoxyalkylsubstituierte Amidgruppen enthalten, auf ein carboxylgruppenhaltiges Poly-

2

acrylatharz gepfropft werden. Diese Beschichtungszusammensetzungen werden zur Beschichtung von Dosen für Lebensmittel eingesetzt. In der JP-A-1,104,665 sind keinerlei Hinweise auf das "base coat-clear coat"-Verfahren und die bei diesem Verfahren auftretenden Probleme bei der automatischen Spritzapplikation von wäßrigen Deckbeschichtungszusammensetzungen zu finden.

Die in Stufe (1) des erfindungsgemäßen Verfahrens aufzubringenden pigmentierten Basisbeschichtungszusammensetzungen sind gut bekannt (vgl. z. B. US-PS 3,639,147, EP-A-38127, DE-A-33 33 072 und EP-A-279 813). In Stufe (1) werden vorzugsweise Metallpigmente enthaltende, insbesondere Aluminiumpigmente enthaltende Basisbeschichtungszusammensetzungen eingesetzt. Auf diese Weise werden Metalleffektlackierungen erhalten.

Bevor die Herstellung der erfindungsgemäß einzusetzenden Polyacrylatharze näher beschrieben wird, werden zwei Begriffserklärungen vorausgeschickt:

1.) Als Abkürzung für "Methacrylsäure - oder Acrylsäure" wird gelegentlich (Meth)acrylsäure - verwendet.

2.) Die Formulierung "im wesentlichen carboxylgruppenfrei" soll ausdrücken, daß die Komponenten (a1), (a2) und (a3) einen geringen Carboxylgruppengehalt (höchstens aber soviel, daß ein aus den Komponenten (a1), (a2) und (a3) hergestelltes Polyacrylatharz eine Säurezahl von höchstens 10 hat) aufweisen können. Es ist aber bevorzugt, daß der Carboxylgruppengehalt der Komponenten (a1), (a2) und (a3) so niedrig wie möglich gehalten wird. Besonders bevorzugt werden carboxylgruppenfreie (a1), (a2) und (a3) Komponenten eingesetzt.

Zur Herstellung der erfindungsgemäß einzusetzenden Polyacrylatharze kann als Komponenten (a1) jeder mit (a2), (a3), (b1) und (b2) copolymerisierbare, im wesentlichen carboxylgruppenfreie Ester der (Meth)acrylsäure oder ein Gemisch aus solchen (Meth)acrylsäureestern eingesetzt werden. Als Beispiele werden Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat und cycloaliphatische (Meth)acrylsäureester, wie z.B. Cyclohexyl(meth)acrylat, genannt. Bevorzugt werden Gemische aus Alkylacrylaten und/oder Alkylmethacrylaten als (a1) Komponente eingesetzt, die zu mindestens 25 Gew.-% aus n-Butyl- und/oder t-Butylacrylat und/oder n-Butyl- und/oder t-Butylmethacrylat bestehen.

Als Komponente (a2) können alle mit (a1), (a3), (b1) und (b2) copolymerisierbaren ethylenisch ungesättigten Monomere, die mindestens eine Hydroxylgruppe pro Molekül tragen und im wesentlichen carboxylgruppenfrei sind oder ein Gemisch aus solchen Monomeren eingesetzt werden. Als Beispiele werden Hydroxylalkylester der Acrylsäure, Methacrylsäure oder einer anderen $\alpha,\beta$-ethylenisch ungesättigten Carbonsäure genannt. Diese Ester können sich von einem Alkylenglykol ableiten, das mit der Säure verestert ist, oder sie können durch Umsetzung der Säure mit einem Alkylenoxid erhalten werden. Als Komponente (a2) werden vorzugsweise Hydroxalkyester der Acrylsäure und Methacrylsäure, in denen die Hydroxyalkylgruppe bis zu 4 Kohlenstoffatome enthält, Umsetzungsprodukte aus cyclischen Estern, wie z.B. $\Sigma$-Caprolacton und diesen Hydroxyalkylestern oder Mischungen aus diesen Hydroxyalkylestern bzw. $\Sigma$-caprolactonmodifizierten Hydroxyalkylestern eingesetzt. Als Beispiele für derartige Hydroxyalkylester werden 2-Hydroxyethylacrylat, 2-Hydroxypropylmethacrylat, 2-Hydroxypropylacrylat, 3-Hydroxypropylmethacrylat, 3-Hydroxypropylacrylat, 2-Hydroxyethylmethacrylat, 4-Hydroxybutylacrylat und 4-Hydroxybutylmethacrylat genannt. Entsprechende Ester von anderen ungesättigten Säuren, wie z.B. Ethacrylsäure, Crotonsäure und ähnlichen Säuren mit bis zu etwa 6 Kohlenstoffatomen im Molekül, können auch eingesetzt werden.

Als Komponente (a3) können alle mit (a1), (a2), (b1) und (b2) copolymerisierbaren, von (a1) und (a2) verschiedenen, im wesentlichen carboxylgruppenfreien ethylenisch ungesättigte Monomere oder Gemische aus solchen Monomeren eingesetzt werden. Als Komponente (a3) werden vorzugsweise vinylaromatische Kohlenwasserstoffe, wie Styrol, $\alpha$-Alkylstyrol und Vinyltoluol, eingesetzt.

Die Komponenten (a1), (a2) und gegebenenfalls (a3) werden gegebenenfalls in einem organischen Lösemittel gemischt und zu einem organischen Lösemittel oder Lösemittelgemisch gegeben und dort in Gegenwart mindestens eines Polymerisationsinitiators polymerisiert. Als organische Lösemittel und Polymerisationsinitiatoren werden die für die Herstellung von Polyacrylatharzen üblichen und für die Herstellung von wäßrigen Dispersionen geeigneten Lösemittel und Polymerisationsinitiatoren eingesetzt. Als Beispiele für brauchbare Lösemittel werden Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether, 2-Hydroxypropionsäureethylester und 3-Methyl-3-methoxybutanol genannt. Als Beispiele für brauchbare Polymerisationsinitiatoren werden freie Radikale bildende Initiatoren, wie z.B. t-Butylperethylhexanoat, Benzoylperoxid, Azobisisobutyronitril und t-Butylperbenzoat genannt. Die Polymerisation wird zweckmäßigerweise bei einer Temperatur von 80 bis 160 °C, vorzugsweise 110 bis 160 °C durchgeführt. Das Gemisch aus (a1), (a2) und gegebenenfalls (a3) wird innerhalb von 2 bis 8 Stunden, vorzugsweise innerhalb von 3 bis 6 Stunden zu dem organischen Lösemittel oder Lösemittelgemisch zugegeben und dort in Gegenwart mindestens eines freie Radikale bildenden Initiators polymerisiert.

Nachdem mindestens 80 Gew.-%, vorzugsweise 100 Gew.-% der aus (a1), (a2) und gegebenenfalls (a3) bestehenden Mischung zugegeben worden sind, werden in der Stufe (II)

(b1)     mehr als 25 bis weniger als 60, vorzugsweise 33 - 50 Gew.-% eines mindestens eine Carboxylgruppe pro Molekül tragenden, mit (a1), (a2), (a3) und (b2) copolymerisierbaren, ethylenisch ungesättigten Monomeren oder eines Gemisches aus solchen Monomeren zusammen mit

(b2)     40 bis 75 Gew.-% eines carboxylgruppenfreien, mit (a1), (a2), (a3) und (b1) copolymerisierbaren, ethylenisch ungesättigten Monomers oder eines Gemisches aus solchen Monomeren

zugegeben und so lange weiterpolymerisiert, bis die in Stufe (I) und (II) zugegebenen Monomeren im wesentlichen vollständig umgesetzt worden sind.

Mit der Zugabe der aus (b1) und (b2) bestehenden Mischung sollte erst dann begonnen werden, wenn mindestens 80 Gew.-%, vorzugsweise mindestens 90 Gew.-% der in Stufe (I) zugegebenen Monomere umgesetzt worden sind. Es ist besonders bevorzugt, mit der Zugabe der aus (b1) und (b2) bestehenden Mischung erst dann zu beginnen, wenn die in Stufe I zugegebenen Monomeren im wesentlichen vollständig umgesetzt worden sind. Hierbei ist es zweckmäßig, den Initiatorzulauf nach etwa 30 Minuten nach Beendigung der Zugabe der Mischung aus (a1), (a2) und ggf. (a3) bis zum Zeitpunkt der Zugabe der Mischung aus (b1) und (b2) zu unterbrechen.

Als Komponente (b1) kann jedes mindestens eine Carboxylgruppe pro Molekül tragende, mit (a1), (a2), (a3) und (b2) copolymerisierbare, ethylenisch ungesättigte Monomer oder ein Gemisch aus solchen Monomeren eingesetzt werden. Als Komponente (b1) werden vorzugsweise Acrylsäure und/oder Methacrylsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt. Als Komponente (b1) können auch Maleinsäuremono(meth)acryloyloxiethylester, Bernsteinsäuremono(meth)acryloyloxiethylester und Phthalsäuremono(meth)acryloyloxiethylester eingesetzt werden.

Als Komponente (b2) kann jedes mit (a1), (a2), (a3) und (b1) copolymerisierbare ethylenisch ungesättigte Monomer oder ein Gemisch aus solchen Monomeren eingesetzt werden. Als Komponente (b2) können alle bei der Beschreibung der Komponenten (a1), (a2) und (a3) aufgezählten Monomere eingesetzt werden.

Die Mischung aus den Komponenten (b1) und (b2) wird vorzugsweise innerhalb von 10 bis 90 Minuten, besonders bevorzugt innerhalb von 30 bis 75 Minuten zugegeben.

Nach Beendigung der Zugabe der Mischung aus (b1) und (b2) wird so lange weiterpolymerisiert, bis alle eingesetzten Monomeren im wesentlichen vollständig umgesetzt worden sind.

Die Komponenten (a1), (a2), (a3), (b1) und (b2) werden in Art und Menge so ausgewählt, daß das Reaktionsprodukt eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40 °C bis +60 °C, vorzugsweise -20 °C bis +40 °C, aufweist.

Die Glasübergangstemperaturen von Polyacrylatharzen können nach folgender Formel berechnet werden:

$$\frac{1}{T_G} = \sum_{n=1}^{n=x} \frac{W_n}{T_{Gn}}$$

$T_G$     = Glasübergangstemperatur des Polyacrylatharzes

x     = Anzahl der im Polyacrylatharz einpolymerisierten verschiedenen Monomere

$W_n$     = Gewichtsanteil des n-ten Monomers

$T_{Gn}$     = Glasübergangstemperatur des Homopolymers aus dem n-ten Monomer

Die Menge und Zugabegeschwindigkeit des Initiators wird vorzugsweise so gewählt, daß ein Polyacrylatharz mit einem zahlenmittleren Molekulargewicht von 2500 bis 20000 erhalten wird. Es ist bevorzugt, die Initiatorzugabe zum gleichen Zeitpunkt wie die Zugabe der Mischung aus den Komponenten (a1), (a2) und gegebenenfalls (a3) zu beginnen und etwa eine halbe Stunde nachdem die Zugabe der Mischung aus (b1) und (b2) beendet worden ist, zu beenden. Der Initiator wird vorzugsweise in konstanter Menge pro Zeiteinheit zugegeben. Nach Beendigung der Initiatorzugabe wird das Reaktionsgemisch noch so lange (in der Regel 1 1/2 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung unumgesetzt zurückbleiben kann.

Die erfindungsgemäßen Polyacrylatharze werden hergestellt, indem 40 bis 90 Gew.-%, vorzugsweise 40 bis 80 Gew.-% der Komponente (a1), 10 bis 45 Gew.-%, vorzugsweise 12 bis 35 Gew.-% der Komponente (a2), 0 bis 25 Gew.-%, vorzugsweise 8 bis 20 Gew.-% der Komponente (a3), 2,5 bis 15 Gew.-%, vorzugsweise 3 bis 7 Gew.-% der Komponente (b1) und 4 bis 60 Gew.-%, vorzugsweise 5 bis 28 Gew.-% der Komponente (b2) eingesetzt werden, wobei die Summe der Gewichtsteile von (a1), (a2), (a3), (b1) und (b2) stets 100 Gew.-% ergibt.

Nach Beendigung der Polymerisation wird das erhaltene Polyacrylatharz zumindest teilweise neutralisiert und in Wasser dispergiert.

Zur Neutralisation können sowohl organische Basen als auch anorganische Basen verwendet werden. Vorzugsweise werden primäre, sekundäre und tertiäre Amine, wie z.B. Ethylamin, Propylamin, Dimethylamin, Dibutylamin, Cyclohexylamin, Benzylamin, Morpholin, Piperidin und Triethanolamin verwendet. Besonders bevorzugt werden tertiäre Amine als Neutralisationsmittel eingesetzt, insbesondere Dimethylethanolamin, Triethylamin, Dimethylisopropylamin Tripropylamin und Tributylamin.

Die Neutralisationsreaktion wird im allgemeinen durch Mischen der neutralisierenden Base mit dem Polyacrylatharz durchgeführt. Dabei wird vorzugsweise soviel Base eingesetzt, daß die Deckbeschichtungszusammensetzung einen pH-Wert von 7-8,5, vorzugsweise 7,2 bis 7,8 aufweist.

Anschließend wird das partiell oder vollständig neutralisierte Polyacrylatharz durch Zugabe von Wasser dispergiert. Dabei entsteht eine wäßrige Polyacrylatharzdispersion. Gegebenenfalls kann ein Teil oder das gesamte organische Lösemittel abdestilliert werden. Die erfindungsgemäßen Polyacrylatharzdispersionen enthalten Polyacrylatharzteilchen, deren mittlere Teilchengröße vorzugsweise zwischen 60 und 300 nm liegt (Meßmethode: Laserlichtstreuung, Meßgerät: Malvern Autosizer 2C).

Aus den so erhaltenen wäßrigen Polyacrylatharzdispersionen werden nach allgemein bekannten Methoden durch Zumischung eines Aminoplastharzes und gegebenenfalls weiterer Zusätze, wie z.B. Verlaufshilfsmitteln, UV-Stabilisatoren, transparenten Pigmenten usw. erfindungsgemäße Deckbeschichtungszusammensetzungen erhalten.

Die erfindungsgemäßen Deckbeschichtungszusammensetzungen enthalten vorzugsweise soviel Aminoplastharz, daß das Gewichtsverhältnis zwischen Polyacrylatharzfeststoff und Aminoplastharzfeststoff 60 : 40 bis 90 : 10, besonders bevorzugt 70 : 30 bis 85 : 15, beträgt.

Prinzipiell können alle Aminoplastharze, die sich mit dem erfindungsgemäßen Polyacrylatharz zu einer stabilen Deckbeschichtungszusammensetzung verarbeiten lassen, als Vernetzungsmittel eingesetzt werden. Vorzugsweise werden Melamin-Formaldehydharze, die mit aliphatischen Alkoholen, die vorzugsweise 1 bis 4 Kohlenstoffatome pro Molekül enthalten, teilweise oder vollständig verethert sind, als Vernetzungsmittel eingesetzt.

Vor der Applikation werden die erfindungsgemäßen Deckbeschichtungszusammensetzungen auf Spritzviskosität (i.a. 20 bis 40 sec. Auslaufzeit aus DIN-Becher 4 (DIN 53 211 (1974)) und einen pH-Wert von 7,0 bis 8,5, vorzugsweise 7,2 bis 7,8 eingestellt.

Die erfindungsgemäßen Deckbeschichtungszusammensetzungen

- weisen bei Spritzviskosität einen so hohen Feststoffgehalt (20 bis 45 Gew.-%, vorzugsweise 32 bis 40 Gew.-%) auf, daß mit ein bis zwei Spritzgängen (Kreuzgänge) Lackfilme mit ausreichender Schichtdicke (die Dicke des eingebrannten Lackfilms sollte vorzugsweise zwischen 25 und 45 μm liegen) erhalten werden und
- liefern eingebrannte Lackfilme mit einem sehr guten Aussehen (guter Verlauf, hoher Glanz, guter Decklackstand...) und guten mechanisch-technologischen Eigenschaften und
- weisen einen verhältnismäßigen niedrigen Anteil an organischen Cosolventien (weniger als 35 Gew.-%, bezogen auf den Gesamtfeststoffgehalt an Bindemitteln und Vernetzungsmitteln) auf.

Wenn die erfindungsgemäßen Deckbeschichtungszusammensetzungen zusammen mit wasserverdünnbaren Basisbeschichtungszusammensetzungen zur Herstellung von Metalleffektlackierungen verwendet werden, dann werden Metalleffektlackierungen erhalten, in denen die transparente Deckschicht besonders gut auf der Basisschicht haftet.

Die erfindungsgemäßen Deckbeschichtungszusammensetzungen können neben dem erfindungsgemäß eingesetzten Polyacrylatharz auch noch vernetzte Polymermikroteilchen wie sie z.B. in der EP-A-38127 offenbart sind und/oder weitere verträgliche Harze, wie z.B. wasserverdünnbare oder wasserlösliche Polyacrylatharze, Polyesterharze, Alkydharze oder Epoxidharzester enthalten, und sie können auch pigmentiert werden.

Die erfindungsgemäßen Deckbeschichtungszusammensetzungen können sowohl bei der Serien- als auch bei der Reparaturlackierung eingesetzt werden.

In den folgenden Beispielen wird die Erfindung näher erläutert: Alle Angaben zu Teilen und Prozenten sind Gewichtsangaben, wenn nicht ausdrücklich etwas anderes angegeben wird.

A. Herstellung erfindungsgemäßer Deckbeschichtungszusammensetzungen

Deckbeschichtungszusammensetzung 1 (D1)

In einem Stahlkessel, ausgestattet mit Monomerzulauf, Initiatorzulauf, Thermometer, Ölheizung und Rückflußkühler werden 33 Gew.-Teile Butylglykol vorgelegt und auf 110 °C aufgeheizt. Dann wird eine Lösung von 6,0 Gew.-Teilen t-Butylperethylhexanoat in 6,0 Gew.-Teilen Butylglykol in einer solchen Geschwindigkeit zugegeben, daß die Zugabe nach 5 h 30 min. abgeschlossen ist. Mit Beginn der Zugabe der t-Butylperethylhexanoatlösung wird auch mit der Zugabe der Mischung aus (a1): 24,1 Gew.-Teilen n-Butylacrylat, 21,0 Gew.-Teilen t-Butylacrylat, 15,0 Gew.-Teilen Methylmethacrylat, (a2): 24,9 Gew.-Teilen Hydroxipropylacrylat und (a3): 15,0 Gew.-Teilen Styrol begonnen. Die Mischung aus (a1), (a2) und (a3) wird in einer solchen Geschwindigkeit zugegeben, daß die Zugabe nach 5 h abgeschlossen ist.

Nachdem die t-Butylperethylhexanoatlösung vollständig zugegeben worden ist, wird die Polymerisationstemperatur noch 1 h auf 110 °C gehalten.

Dann wird eine Lösung von 0,49 Gew.-Teilen t-Butylperethylhexanoat in 3,5 Gew.-Teilen Butylglykol in einer solchen Geschwindigkeit zugegeben, daß die Zugabe nach 1 h 15 min. abgeschlossen ist. Mit Beginn der Zugabe der t-Butylperethylhexanoatlösung wird auch mit der Zugabe einer Mischung aus (b1): 5,6 Gew.-Teilen Acrylsäure, (b2): 3,3 Gew.-Teilen n-Butylacrylat, 2,2 Gew.-Teilen t-Butylacrylat und 1,1 Gew.-Teilen Hydroxipropylacrylat begonnen. Die Mischung aus (b1) und (b2) wird in einer solchen Geschwindigkeit zugegeben, daß die Zugabe nach 1 h abgeschlossen ist.

Nach Abschluß der Zugabe der t-Butylperethylhexanoatlösung wird die Reaktionsmischung noch 1 h bei 110°C gehalten.

Die erhaltene Harzlösung wird im Vakuum destillativ auf 80 Gew.-% Feststoffgehalt aufkonzentriert und bei etwa 80 °C innerhalb von etwa 30 min. mit Dimethylethanolamin bis zu einem Neutralisationsgrad von 80 % neutralisiert. Dann wird die Harzlösung auf 60 °C abgekühlt. Danach werden 40 Gew.-Teile einer 70 %igen Lösung eines handelsüblichen wasserverdünnbaren Melaminformaldehydharzes (Maprenal MF 927®) in Isobutanol und 0,14 Gew.-Teile eines handelsüblichen Verlaufsmittels (Fluorad FC 430) bei 60 °C zugegeben und es wird 1 h bei 60 °C homogenisiert. Anschließend wird soviel Wasser zugegeben, bis der Feststoffgehalt der Dispersion etwa 60 Gew.-% beträgt.

Die erhaltene Dispersion zeigt folgende Kennzahlen: Zahlenmittleres Molekulargewicht des Polyacrylatharzes aus (a1), (a2), (a3), (b1) und (b2): 4260, Säurezahl des Gesamtfestkörpers: 31,1 mg KOH/g, Feststoffgehalt (in Gew.-%; 1 h, 130 °C): 59,5%.

Deckbeschichtungszusammensetzung 2 (D2)

In einem Stahlkessel, ausgestattet mit Monomerzulauf, Initiatorzulauf, Thermometer, Ölheizung und Rückflußkühler werden 33 Gew.-Teile Butylglykol vorgelegt und auf 110 °C aufgeheizt. Dann wird eine Lösung von 6,0 Gew.-Teilen t-Butylperethylhexanoat in 6,0 Gew.-Teilen Butylglykol in einer solchen Geschwindigkeit zugegeben, daß die Zugabe nach 5 h 30 min. abgeschlossen ist. Mit Beginn der Zugabe der t-Butylperethylhexanoatlösung wird auch mit der Zugabe der Mischung aus (a1) : 23,5 Gew.-Teilen n-Butylacrylat, 21,0 Gew.-Teilen t-Butylacrylat, 15,0 Gew.-Teilen Methylmethacrylat, (a2) : 25,5 Gew.-Teilen Hydroxipropylacrylat und (a3): 15,0 Gew.-Teilen Styrol begonnen. Die Mischung aus (a1),(a2) und (a3) wird in einer solchen Geschwindigkeit zugegeben, daß die Zugabe nach 5 h abgeschlossen ist.

Nachdem die t-Butylperethylhexanoatlösung vollständig zugegeben worden ist, wird die Polymerisationstemperatur noch 1 h auf 110°C gehalten. Dann wird bei 110 °C eine Lösung von 0,79 Gew.-Teilen t-Butylperethylhexanoat in 3,5 Gew.-Teilen Butylglykol in einer solchen Geschwindigkeit zugegeben, daß die Zugabe nach 1 h 15 min. abgeschlossen ist. Mit Beginn der Zugabe der t-Butylperethylhexanoatlösung wird auch mit der Zugabe der Mischung aus (b1): 6,0 Gew.-Teilen Acrylsäure, (b2) :7,0 Gew.-Teilen n-Butylacrylat, 4,7 Gew.-Teilen t-Butylacrylat und 2,3 Gew.-Teilen Hydroxypropylacrylat begonnen.

Die Mischung aus (b1) und (b2) wird in einer solchen Geschwindigkeit zugegeben, daß die Zugabe nach 1 h abgeschlossen ist.

Nach Abschluß der Zugabe der t-Butylperethylhexanoatlösung wird die Reaktionsmischung nach 1 h bei 110 °C gehalten.

Die erhaltene Harzlösung wird im Vakuum destillativ auf 80 Gew.-% Feststoffgehalt aufkonzentriert und bei etwa 80 °C innerhalb von 30 min. mit Dimethylethanolamin bis zu einem Neutralisationsgrad von 80 % neutralisiert. Dann wird die Harzlösung auf 60 °C abgekühlt. Danach werden 42,9 Gew.-Teile einer 70 %igen Lösung eines handelsüblichen wasserverdünnbaren Melaminformaldehydharzes (Maprenal MF 927[R]) in Isobutanol und 0,15 Gew.-Teile eines handelsüblichen Verlaufmittels (Fluorad FC 430) bei 60 °C zugegeben, und es wird 1 h bei 60 °C homogenisiert. Anschließend wird soviel Wasser zugegeben, bis der Feststoffgehalt der Dispersion etwa 60 Gew.-% beträgt.

Die erhaltene Dispersion zeigt folgende Kennzahlen: Zahlenmittleres Molekulargewicht des Polyacrylatharzes aus (a1), (a2), (a3), (b1), und (b2): 3990, Säurezahl des Gesamtfestkörpers: 30,5 mg KOH/g, Feststoffgehalt (in Gew.-%; 1 h, 130 °C):59,7%.

**B. Applikation der erfindungsgemäßen transparenten Deckbeschichtungszusammensetzungen und Prüfung der eingebrannten Lackfilme**

Die gemäß Punkt A hergestellten und auf Raumtemperatur abgekühlten Deckbeschichtungszusammensetzungen werden mit einer 10 %igen wäßrigen Dimethylethanolaminlösung und destilliertem Wasser auf Spritzviskosität (24 s Auslaufzeit aus DIN-Becher 4 (DIN 53 211 (1974)) und einen pH-Wert von 7,5 - 7,6 eingestellt. Auf ein mit einer handelsüblichen Elektrotauchlackierung und einem handelsüblichen Füller beschichtetes phosphatiertes Stahlblech wird eine handelsübliche, Polyurethan, Polyester und Melaminharz enthaltende wasserverdünnbare, mit Aluminiumplättchen pigmentierte Basisbeschichtungszusammensetzung so appliziert, daß eine Trockenfilmdicke von 12-15 μm erhalten wird. Die applizierte Basisbeschichtungszusammensetzung wird 10 min. bei Raumtemperatur und 10 min. bei 80 °C getrocknet. Dann werden die gemäß Punkt A hergestellten Deckbeschichtungszusammensetzungen in zwei Kreuzgängen mit einer Zwischenablüftzeit auf die Basisschicht gespritzt. Schließlich wird 20 min. bei Raumtemperatur getrocknet und 30 min. bei 130 °C im Umluftofen eingebrannt. Die so erhaltenen mehrschichtigen Überzüge wurden mehreren Prüfungen unterzogen. Die Prüfergebnisse sind in der folgenden Tabelle zusammengefaßt.

|  | Lackierung mit D1 | Lackierung mit D 2 |
|---|---|---|
| Applikationsfeststoffgehalt (1 h 130 °C, in Gew.-%) | 34,1 | 37,9 |
| Dicke der transparenten Deckschicht ($\mu$m) | 42 | 44 |
| Gitterschnitt (1) | 0 | 0 |
| Glanz (2) | 84 | 82 |
| DOI (5) | 88 | 87 |
| Blasengrad (3) nach Belastung (4) | m0/g0 | m0/g0 |
| Glanz (2) nach Belastung (4) | 82 | 80 |
| DOI nach Belastung (4) | 86 | 84 |

(1) Prüfung nach DIN 53 151 inklusive Tesaabriß-Test

(2) Glanzgrad nach DIN 67530, Winkel 20°

(3) nach DIN 53209 (m = Kennbuchstabe für die Häufigkeit der Blasen je Flächeneinheit (0 = keine Blasen, 5 = sehr viele Blasen), g = Kennbuchstabe für die Größe der Blasen (0 = keine Blasen, 1 = gerade noch sichtbare Blasen, 5 = sehr große Blasen), genaue Bestimmung des Blasengrades vgl. DIN 53209)

(4) 240 h bei 40 °C KK (nach DIN 50 017; KK = Kondenswasser-Konstantklima)

(5) Distinctness of reflected image; 100 = bester Wert, 0 = schlechtester Wert

**Patentansprüche**

1. Verfahren zur Herstellung eines mehrschichtigen schützenden und/oder dekorativen Überzugs auf einer Substratoberfläche, bei dem

(1) eine pigmentierte Basisbeschichtungszusammensetzung auf die Substratoberfläche aufgebracht wird

(2) aus der in Stufe (1) aufgebrachten ZusammenSetzung ein Polymerfilm gebildet wird

(3) auf die so erhaltene Basisschicht eine ein wasserverdünnbares Polyacrylatharz als Bindemittel und ein Aminoplastharz als Vernetzungsmittel enthaltende transparente wäßrige Deckbeschichtungszusammensetzung aufgebracht wird und anschließend

(4) die Basisschicht zusammen mit der Deckschicht eingebrannt wird,

dadurch gekennzeichnet, daß die Deckbeschichtungszusammensetzung ein wasserverdünnbares Polyacrylatharz als Bindemittel enthält, das erhältlich ist, indem

(I) ein Gemisch aus

(a1)     einem mit (a2), (a3), (b1) und (b2) co polymerisierbaren, im wesentlichen carboxylgruppenfreien (Meth)acrylsäureester oder einem Gemisch aus solchen (Meth)acrylsäureestern und

(a2)     einem mit (a1), (a3), (b1) und (b2) copolymerisierbaren ethylenisch ungesättigten Monomeren, das mindestens eine Hydroxylgruppe pro Molekül trägt und im wesentlichen carboxylgruppenfrei ist oder einem Gemisch aus solchen Monomeren und gegebenenfalls

(a3)     einem mit (a1), (a2), (b1) und (b2) copolymerisierbaren, im wesentlichen carboxylgruppenfreien, von (a1) und (a2) verschiedenen ethylenisch ungesättigten Monomeren oder einem Gemisch aus solchen Monomeren

zu einem organischen Lösemittel oder Lösemittelgemisch gegeben und in Gegenwart mindestens eines Polymerisationsinitiators polymerisiert wird und

(II) nachdem mindestens 80 Gew.-% des aus (a1), (a2) und gegebenenfalls (a3) bestehenden Gemisches zugegeben worden sind und nachdem mindestens 80 Gew.-% der in Stufe (I) zugegebenen Monomere umgesetzt worden sind

(b1)     mehr als 25 bis weniger als 60, vorzugsweise 33 bis 50 Gew.-% eines mindestens eine Carboxylgruppe pro Molekül tragenden, mit (a1), (a2), (a3) und (b2) copolymerisierbaren ethylenisch ungesättigten Monomeren oder eines Gemisches aus solchen Monomeren zusammen mit

(b2)     40 bis 75 Gew.-% eines carboxylgruppenfreien, mit (a1), (a2), (a3) und (b1) copolymerisierbaren ethylenisch ungesättigten Monomers oder eines Gemisches aus solchen Monomeren

zugegeben werden und weiterpolymerisiert wird und

(III) nach Beendigung der Polymerisation das erhaltene Polyacrylatharz zumindest teilweise neutralisiert und in Wasser dispergiert wird, wobei die Summe der Gewichtsanteile von (b1) und (b2) stets 100 Gew.-% ergibt und (a1), (a2), (a3), (b1) und (b2) in Art und Menge so ausgewählt werden, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40 °C bis +60 °C, vorzugsweise -20 °C bis +40 °C, aufweist.

2. Wäßrige Beschichtungszusammensetzungen, enthaltend ein wasserverdünnbares Polyacrylatharz als Bindemittel und ein Aminoplastharz als Vernetzungsmittel, dadurch gekennzeichnet, daß das wasserverdünnbare Polyacrylatharz erhältlich ist, indem

(I) ein Gemisch aus

(a1)     einem mit (a2), (a3), (b1) und (b2) copolymerisierbaren, im wesentlichen carboxylgruppenfreien (Meth)acrylsäureester oder einem Gemisch aus solchen (Meth)acrylsäureestern und

(a2)     einem mit (a1), (a3), (b1) und (b2) copolymerisierbaren ethylenisch ungesättigten Monomeren, das mindestens eine Hydroxylgruppe pro Molekül trägt und im wesentlichen carboxylgruppenfrei ist, oder einem Gemisch aus solchen Monomeren und gegebenenfalls

(a3)     einem mit (a1), (a2), (b1) und (b2) copolymerisierbaren, im wesentlichen carboxylgruppenfreien, von (a1) und (a2) verschiedenen ethylenisch ungesättigten Monomeren oder einem Gemisch aus solchen Monomeren

zu einem organischen Lösemittel oder Lösemittelgemisch gegeben und in Gegenwart mindestens eines Polymerisationsinitiators polymerisiert wird und

(II) nachdem mindestens 80 Gew.-% des aus (a1), (a2) und gegebenenfalls (a3) bestehenden Gemisches zugegeben worden sind und nachdem mindestens 80 Gew.-% der in Stufe (I) zugegebenen Monomere umgesetzt worden sind

(b1)     mehr als 25 bis weniger als 60, vorzugsweise 33 - 50 Gew.-% eines mindestens eine Carboxylgruppe pro Molekül tragenden, mit (a1), (a2), (a3) und (b2) copolymerisierbaren ethylenisch ungesättigten Monomeren oder eines Gemisches aus solchen Monomeren zusammen mit

(b2)     40 bis 75 Gew.-% eines carboxylgruppenfreien, mit (a1), (a2), (a3) und (b1) copolymerisierbaren ethylenisch ungesättigten Monomers oder eines Gemisches aus solchen Monomeren

zugegeben werden und weiterpolymerisiert wird und

(III) nach Beendigung der Polymerisation das erhaltene Polyacrylatharz zumindest teilweise neutralisiert und in Wasser dispergiert wird, wobei die Summe der Gewichtsanteile von (b1) und (b2) stets 100 Gew.-% ergibt und (a1), (a2), (a3), (b1) und (b2) in Art und Menge so ausgewählt werden, daß das Polyacrylatharz eine Hydroxyl-zahl von 40 bis 200, vorzugsweise 60 bis 140, eine Säurezahl von 20 bis 100, vorzugsweise 25 bis 50 und eine Glasübergangstemperatur ($T_G$) von -40 °C bis +60 °C, vorzugsweise -20 °C bis +40 °C, aufweist.

3.  Verfahren nach Anspruch 1, dadurch gekennzeichnet, daß in Stufe (1) eine wäßrige, vorzugsweise Metallpigmente enthaltende Basisbeschichtungszusammensetzung aufgebracht wird.

4.  Verfahren oder Beschichtungszusammensetzungen nach einem der Ansprüche 1 bis 3, dadurch gekennzeichnet, daß in den Stufen (I) und (II) bei einer Temperatur von 80 bis 160 °C, vorzugsweise 110 bis 160 °C in Gegenwart mindestens eines freie Radikale bildenden Initiators polymerisiert wird und daß die Stufe (I) 2 bis 8 Stunden, vorzugsweise 3 bis 6 Stunden dauert und die Zugabe der Mischung aus (b1) und (b2) innerhalb von 10 bis 90 Minuten, vorzugsweise innerhalb von 30 bis 75 Minuten, erfolgt.

5.  Verfahren oder Beschichtungszusammensetzungen nach einem der Ansprüche 1 bis 4, dadurch gekennzeichnet, daß bei Spritzviskosität der Gehalt an Polyacrylatharz und Aminoplastharz zusammen 20 bis 45 Gew.-%, vorzugsweise 32 bis 40 Gew.-% beträgt.

6.  Wasserverdünnbare Polyacrylatharze, dadurch gekennzeichnet, daß sie erhältlich sind, indem

(I) ein Gemisch aus

(a1)     einem mit (a2), (a3), (b1) und (b2) copolymerisierbaren, im wesentlichen carboxylgruppenfreien (Meth)acrylsäureester oder einem Gemisch aus solchen (Meth)acrylsäureester und

(a2)     einem mit (a1), (a3), (b1) und (b2) copolymerisierbaren ethylenisch ungesättigten Monomeren, das mindestens eine Hydroxylgruppe pro Molekül trägt und im wesentlichen carboxylgruppenfrei

ist, oder einem Gemisch aus solchen Monomeren und gegebenenfalls

(a3)     einem mit (a1), (a2), (b1) und (b2) copolymerisierbaren, im wesentlichen carboxylgruppenfreien, von (a1) und (a2) verschiedenen ethylenisch ungesättigten Monomeren oder einem Gemisch aus solchen Monomeren

zu einem organischen Lösemittel oder Lösemittelgemisch gegeben und in Gegenwart mindestens eines Polymerisationsinitiators polymerisiert wird und

(II) nachdem mindestens 80 Gew.-% des aus (a1), (a2) und gegebenenfalls (a3) bestehenden Gemisches zugegeben worden sind und nachdem mindestens 80 Gew.-% der in Stufe (I) zugegebenen Monomere umgesetzt worden sind

(b1)     mehr als 25 bis weniger als 60, vorzugsweise 33 - 50 Gew.-% eines mindestens eine Carboxylgruppe pro Molekül tragenden, mit (a1), (a2), (a3) und (b2) copolymerisierbaren ethylenisch ungesättigten Monomeren oder eines Gemisches aus solchen Monomeren zusammen mit

(b2)     40 bis 75 Gew.-% eines carboxylgruppenfreien, mit (a1), (a2), (a3) und (b1) copolymerisierbaren ethylenisch ungesättigten Monomers oder eines Gemisches aus solchen Monomeren

zugegeben werden und weiterpolymerisiert wird und

(III) nach Beendigung der Polymerisation das erhaltene Polyacrylatharz zumindest teilweise neutralisiert und in Wasser dispergiert wird, wobei die Summe der Gewichtsanteile von (b1) und (b2) stets 100 Gew.-% ergibt und (a1), (a2), (a3), (b1) und (b2) in Art und Menge so ausgewählt werden, daß das Polyacrylatharz eine Hydroxylzahl von 40 bis 200, vorzugsweise 60 bis 140, eine Säurezahl von 20 bis 100, vorzugsweise 25 bis 50 und eine Glasübergangstemperatur ($T_G$) von -40 °C bis +60 °C, vorzugsweise -20 °C bis +40 °C, aufweist.

7.  Verfahren zur Herstellung von wasserverdünnbaren Polyacrylatharzen, dadurch gekennzeichnet, daß
    (I) ein Gemisch aus

    (a1)    einem mit (a2), (a3), (b1) und (b2) copolymerisierbaren, im wesentlichen carboxylgruppenfreien (Meth)acrylsäureester oder einem Gemisch aus solchen (Meth)acrylsäureestern und
    (a2)    einem mit (a1), (a3), (b1) und (b2) copolymerisierbaren ethylenisch ungesättigten Monomeren, das mindestens eine Hydroxylgruppe pro Molekül trägt und im wesentlichen carboxylgruppenfrei ist, oder einem Gemisch aus solchen Monomeren und gegebenenfalls
    (a3)    einem mit (a1), (a2), (b1) und (b2) copolymerisierbaren, im wesentlichen carboxylgruppenfreien, von (a1) und (a2) verschiedenen ethylenisch ungesättigten Monomeren oder
            einem Gemisch aus solchen Monomeren

    zu einem organischen Lösemittel oder Lösemittelgemisch gegeben und in Gegenwart mindestens eines Polymerisationsinitiators polymerisiert wird und
    (II) nachdem mindestens 80 Gew.-% des aus (a1), (a2) und gegebenenfalls (a3) bestehenden Gemisches zugegeben worden sind und nachdem mindestens 80 Gew.-% der in Stufe (I) zugegebenen Monomere umgesetzt worden sind

    (b1)    mehr als 25 bis weniger als 60, vorzugsweise 33 - 50 Gew.-% eines mindestens eine Carboxylgruppe pro Molekül tragenden, mit (a1), (a2), (a3) und (b2) copolymerisierbaren
            ethylenisch ungesättigten Monomeren oder eines Gemisches aus solchen Monomeren
            zusammen mit
    (b2)    40 bis 75 Gew.-% eines carboxylgruppenfreien, mit (a1), (a2), (a3) und (b1) copolymerisierbaren ethylenisch ungesättigten Monomers oder eines Gemisches aus solchen Monomeren

    zugegeben werden und weiterpolymerisiert wird und
    (III) nach Beendigung der Polymerisation das erhaltene Polyacrylatharz zumindest teilweise neutralisiert und in Wasser dispergiert wird, wobei die Summe der Gewichtsanteile von (b1) und (b2) stets 100
    Gew.-% ergibt und (a1), (a2), (a3), (b1) und (b2) in Art und Menge so ausgewählt werden, daß das Polyacrylatharz eine Hydroxylzahl von 40 bis 200, vorzugsweise 60 bis 140, eine Säurezahl von 20 bis
    100, vorzugsweise 25 bis 50 und eine Glasübergangstemperatur ($T_G$) von -40 °C bis +60 °C, vorzugsweise -20 °C bis +40 °C, aufweist.

8.  Polyacrylatharze oder Verfahren nach Anspruch 6 oder 7, dadurch gekennzeichnet, daß in den Stufen
    (I) und (II) bei einer Temperatur von 80 bis 160 °C, vorzugsweise 110 bis 160 °C in Gegenwart mindestens
    eines freie Radikale bildenden Initiators polymerisiert wird und daß die Stufe (I) 2 bis 8 Stunden, vorzugsweise 3 bis 6 Stunden dauert und die Zugabe der Mischung aus (b1) und (b2) innerhalb von 10 bis 90
    Minuten, vorzugsweise innerhalb von 30 bis 75 Minuten erfolgt.

## Claims

1.  Process for the production of a multicoat protective and/or decorative coating on a substrate surface, in
    which process
    (1) a pigmented basecoat composition is applied to the substrate surface,
    (2) a polymer film is formed from the composition applied in stage (1),
    (3) a transparent aqueous topcoat composition containing a water-thinnable polyacrylate resin as binder and an amino resin as crosslinking agent is applied to the basecoat obtained in this way and subsequently
    (4) the basecoat is baked together with the topcoat,
    characterised in that the topcoat composition contains a water-thinnable polyacrylate resin as binder,
    which resin can be obtained
    (I) by adding a mixture of

    (a1)    a (meth)acrylic acid ester which is copolymerisable with (a2), (a3), (b1) and (b2) and is
            essentially free from carboxyl groups, or a mixture of such (meth)acrylic acid esters, and
    (a2)    an ethylenically unsaturated monomer which is copolymerisable with (a1), (a3), (b1) and
            (b2), contains at least one hydroxyl group per molecule and is essentially free from carboxyl groups, or a mixture of such monomers, and, if appropriate,
    (a3)    an ethylenically unsaturated monomer which is copolymerisable with (a1), (a2), (b1) and

11

(b2), is essentially free from carboxyl groups and is different from (a1) and (a2), or a mixture of such monomers

to an organic solvent or solvent mixture and carrying out a polymerisation in the presence of at least one polymerisation initiator, and

(II) by adding, after at least 80% by weight of the mixture consisting of (a1), (a2) and, if appropriate, (a3) has been added, and after at least 80% by weight of the monomers added in stage (I) have reacted,

(b1)   more than 25 and less than 60, preferably 33 - 50% by weight of an ethylenically unsaturated monomer which contains at least one carboxyl group per molecule and is copolymerisable with (a1), (a2), (a3) and (b2), or a mixture of such monomers, together with

(b2)   40 - 75% by weight of an ethylenically unsaturated monomer which is free from carboxyl groups and is copolymerisable with (a1), (a2), (a3) and (b1), or a mixture of such monomers,

and carrying out further polymerisation, and

(III) by neutralising, at least partially, the polyacrylate resin obtained at the end of the polymerisation and dispersing it in water, the sum of the proportions by weight of (b1) and (b2) always being 100% by weight and the type and amount of (a1), (a2), (a3), (b1) and (b2) being chosen so that the polyacrylate resin has a hydroxyl value of 40 to 200, preferably 60 to 140, an acid value of 20 to 100, preferably 25 to 50, and a glass transition temperature ($T_G$) of -40°C to +60°C, preferably -20°C to +40°C.

2.   Aqueous coating compositions comprising a water-thinnable polyacrylate resin as binder and an amino resin as crosslinking agent, characterised in that the water-thinnable polyacrylate resin can be obtained

(I) by adding a mixture of

(a1)   a (meth)acrylic acid ester which is copolymerisable with (a2), (a3), (b1) and (b2) and is essentially free from carboxyl groups, or a mixture of such (meth)acrylic acid esters, and

(a2)   an ethylenically unsaturated monomer which is copolymerisable with (a1), (a3), (b1) and (b2), contains at least one hydroxyl group per molecule and is essentially free from carboxyl groups, or a mixture of such monomers, and, if appropriate,

(a3)   an ethylenically unsaturated monomer which is copolymerisable with (a1), (a2), (b1) and (b2), is essentially free from carboxyl groups and is different from (a1) and (a2), or a mixture of such monomers

to an organic solvent or solvent mixture and carrying out a polymerisation in the presence of at least one polymerisation initiator, and

(II) by adding, after at least 80% by weight of the mixture consisting of (a1), (a2) and, if appropriate, (a3) has been added, and after at least 80% by weight of the monomers added in stage (I) have reacted,

(b1)   more than 25 and less than 60, preferably 33 - 50% by weight of an ethylenically unsaturated monomer which contains at least one carboxyl group per molecule and is copolymerisable with (a1), (a2), (a3) and (b2), or a mixture of such monomers, together with

(b2)   40 - 75% by weight of an ethylenically unsaturated monomer which is free from carboxyl groups and is copolymerisable with (a1), (a2), (a3) and (b1), or a mixture of such monomers,

and carrying out further polymerisation, and

(III) at the end of the polymerisation the resultant polyacrylate resin is neutralised, at least partially, and dispersed in water, the sum of the proportions by weight of (b1) and (b2) always being 100% by weight and the type and amount of (a1), (a2), (a3), (b1) and (b2) being chosen so that the polyacrylate resin has a hydroxyl value of 40 to 200, preferably 60 to 140, an acid value of 20 to 100, preferably 25 to 50, and a glass transition temperature ($T_G$) of -40°C to +60°C, preferably -20°C to +40°C.

3.   Process according to Claim 1, characterised in that an aqueous basecoat composition preferably containing metallic pigments is applied in stage (1).

4.   Processes or coating compositions according to one of Claims 1 to 3, characterised in that the polymerisation in stages (I) and (II) is carried out at a temperature of 80 to 160°C, preferably 110 to 160°C in the presence of at least one free radical-forming initiator and in that stage (I) takes 2 to 8 hours, preferably 3 to 6 hours, and the addition of the mixture of (b1) and (b2) is carried out within 10 to 90 minutes, preferably within 30 to 75 minutes.

5.   Processes or coating compositions according to one of Claims 1 to 4, characterised in that the contents of polyacrylate resin and of amino resin together are 20 to 45% by weight, preferably 32 to 40% by weight, at spray viscosity.

6. Water-thinnable polyacrylate resins, characterised in that they can be obtained

(I) by adding a mixture of

(a1)    a (meth)acrylic acid ester which is copolymerisable with (a2), (a3), (b1) and (b2) and is essentially free from carboxyl groups, or a mixture of such (meth)acrylic acid esters, and

(a2)    an ethylenically unsaturated monomer which is copolymerisable with (a1), (a3), (b1) and (b2), contains at least one hydroxyl group per molecule and is essentially free from carboxyl groups, or a mixture of such monomers, and, if appropriate,

(a3)    an ethylenically unsaturated monomer which is copolymerisable with (a1), (a2), (b1) and (b2), is essentially free from carboxyl groups and is different from (a1) and (a2), or a mixture of such monomers

to an organic solvent or solvent mixture and carrying out a polymerisation in the presence of at least one polymerisation initiator, and

(II) by adding, after at least 80% by weight of the mixture consisting of (a1), (a2) and, if appropriate, (a3) has been added, and after at least 80% by weight of the monomers added in stage (I) have reacted,

(b1)    more than 25 and less than 60, preferably 33 - 50% by weight of an ethylenically unsaturated monomer which contains at least one carboxyl group per molecule and is copolymerisable with (a1), (a2), (a3) and (b2), or a mixture of such monomers, together with

(b2)    40 - 75% by weight of an ethylenically unsaturated monomer which is free from carboxyl groups and is copolymerisable with (a1), (a2), (a3) and (b1), or a mixture of such monomers,

and carrying out further polymerisation, and

(III) at the end of the polymerisation the resultant polyacrylate resin is neutralised, at least partially, and dispersed in water, the sum of the proportions by weight of (b1) and (b2) always being 100% by weight and the type and amount of (a1), (a2), (a3), (b1) and (b2) being chosen so that the polyacrylate resin has a hydroxyl value of 40 to 200, preferably 60 to 140, an acid value of 20 to 100, preferably 25 to 50, and a glass transition temperature ($T_G$) of -40°C to +60°C, preferably -20°C to +40°C.

7. Process for the preparation of water-thinnable polyacrylate resins, characterised in that

(I) a mixture of

(a1)    a (meth)acrylic acid ester which is copolymerisable with (a2), (a3), (b1) and (b2) and is essentially free from carboxyl groups, or a mixture of such (meth)acrylic acid esters, and

(a2)    an ethylenically unsaturated monomer which is copolymerisable with (a1), (a3), (b1) and (b2), contains at least one hydroxyl group per molecule and is essentially free from carboxyl groups, or a mixture of such monomers, and, if appropriate,

(a3)    an ethylenically unsaturated monomer which is copolymerisable with (a1), (a2), (b1) and (b2), is essentially free from carboxyl groups and is different from (a1) and (a2), or a mixture of such monomers is added to an organic solvent or solvent mixture and a polymerisation is carried out in the presence of at least one polymerisation initiator, and

(II) after at least 80% by weight of the mixture consisting of (a1), (a2) and, if appropriate, (a3) has been added, and after at least 80% by weight of the monomers added in stage (I) have reacted,

(b1)    more than 25 and less than 60, preferably 33 - 50% by weight of an ethylenically unsaturated monomer which contains at least one carboxyl group per molecule and is copolymerisable with (a1), (a2), (a3) and (b2), or a mixture of such monomers, together with

(b2)    40 - 75% by weight of an ethylenically unsaturated monomer which is free from carboxyl groups and is copolymerisable with (a1), (a2), (a3) and (b1), or a mixture of such monomers,

are added and further polymerisation is carried out and

(III) at the end of the polymerisation the resultant polyacrylate resin is neutralised, at least partially, and dispersed in water, the sum of the proportions by weight of (b1) and (b2) always being 100% by weight and the type and amount of (a1), (a2), (a3), (b1) and (b2) being chosen so that the polyacrylate resin has a hydroxyl value of 40 to 200, preferably 60 to 140, an acid value of 20 to 100, preferably 25 to 50, and a glass transition temperature ($T_G$) of -40°C to +60°C, preferably -20°C to +40°C.

8. Polyacrylate resins or processes according to Claim 6 or 7, characterised in that in stages (I) and (II) polymerisation is carried out at a temperature of 80 to 160°C, preferably 110 to 160°C, in the presence of at least one free radical-forming initiator, and in that stage (I) takes 2 to 8 hours, preferably 3 to 6 hours, and the addition of the mixture of (b1) and (b2) is carried out within 10 to 90 minutes, preferably within 30 to 75 minutes.

**Revendications**

1. Procédé pour la fabrication d'un enduit de protection et/ou décoratif à plusieurs couches sur la surface d'un support, dans lequel

(1) une composition d'enduction de fond pigmentée est appliquée sur la surface du support

(2) une pellicule polymère est formée à partir de la composition appliquée à l'étape (1)

(3) sur la couche de fond ainsi obtenue, on applique une composition d'enduction de finition aqueuse et transparente contenant une résine polyacrylique diluable à l'eau, en tant que liant, et une résine aminoplastique, en tant qu'agent de réticulation, et ensuite

(4) on cuit ensemble la couche de fond et la couche de finition, caractérisé en ce que la composition d'enduction de finition contient, en tant que liant, une résine polyacrylique diluable à l'eau, laquelle est obtenue par le fait

(I) qu'un mélange composé

(a1) d'un ester (méth)acrylique pratiquement sans groupe carboxyle et copolymérisable avec (a2), (a3), (b1) et (b2) ou d'un mélange de ce type d'esters (méth)acryliques et

(a2) d'un monomère éthylénique et copolymérisable avec (a1), (a3), (b1) et (b2), qui contient au moins un groupe hydroxyle par molécule et est pratiquement sans groupe carboxyle ou d'un mélange de ce type de monomères et le cas échéant

(a3) d'un monomère éthylénique et différent de (a1) et de (a2), pratiquement sans groupe carboxyle et copolymérisable avec (a1), (a2), (b1) et (b2) ou d'un mélange de ce type de monomères,

est ajouté à un solvant organique ou un mélange de solvants organiques et polymérisé en présence d'au moins un amorceur de polymérisation et

(II) après que l'on a ajouté au moins 80 % en poids du mélange composé de (a1), de (a2) et le cas échéant de (a3) et après qu'au moins 80 % en poids du monomère ajouté à l'étape (I) sont mis à réagir

(b1) plus de 25 et jusqu'à moins de 60, de préférence 33 - 50 % en poids d'un monomère éthylénique, contenant au moins un groupe carboxyle par molécule et copolymérisable avec (a1), (a2), (a3) et (b2) ou d'un mélange de ce type de monomères, sont ajoutés en même temps que

(b2) 40 a 75 % en poids d'un monomère éthylénique, sans groupe carboxyle et copolymérisable avec (a1), (a2), (a3) et (b1) ou d'un mélange de ce type de monomères

et leur polymérisation est continuée, et

(III) lorsque la polymérisation est terminée, la résine polyacrylique ainsi obtenue est neutralisée, au moins en partie, et dispersée dans l'eau, auquel cas le total des parties en poids de (b1) et (b2) est toujours de 100 % en poids et (a1), (a2), (a3), (b1) et (b2) sont sélectionnés de telle sorte et dans une quantité telle que la résine polyacrylique présente un indice d'hydroxyle de 40 à 200, de préférence 60 à 140, un indice d'acide de 20 à 100, de préférence 25 à 50 et une température de transition vitreuse ($T_V$) de -40 °C jusqu'à +60 °C, de préférence -20 °C à +40 °C.

2. Compositions aqueuses d'enduction contenant une résine polyacrylique diluable à l'eau, en tant que liant, et une résine aminoplastique, en tant qu'agent de réticulation, caractérisées en ce que la résine polyacrylique diluable à l'eau peut être obtenue par le fait

(I) qu'un mélange composé

(a1) d'un ester (méth)acrylique pratiquement sans groupe carboxyle et eopolymérisable avec (a2), (a3), (b1) et (b2) ou d'un mélange de ce type d'esters (méth)acryliques et

(a2) d'un monomère éthylénique et copolymérisable avec (a1), (a3), (b1) et (b2), qui contient au moins un groupe hydroxyle par molécule et est pratiquement sans groupe carboxyle ou d'un mélange de ce type de monomères et le cas échéant

(a3) d'un monomère éthylénique et différent de (a1) et de (a2), pratiquement sans groupe carboxyle et copolymérisable avec (a1), (a2), (b1) et (b2) ou un mélange de ce type de monomères,

est ajouté à un solvant organique ou un mélange de solvants organiques et polymérisé en présence d'au moins un amorceur de polymérisation et

(II) après que l'on a ajouté au moins 80 % en poids du mélange composé de (a1), de (a2) et le cas échéant de (a3) et après qu'au moins 80 % en poids du monomère ajouté à l'étape (I) sont mis à réagir

(b1) plus de 25 et jusqu'à moins de 60, de préférence 33 - 50 % en poids d'un monomère éthylénique, contenant au moins un groupe carboxyle par molécule et copolymérisable avec (a1), (a2), (a3) et (b2) ou d'un mélange de ce type de monomères, sont ajoutés en même temps que

(b2) 40 à 75 % en poids d'un monomère éthylénique, sans groupe carboxyle et copolymérisable avec (a1), (a2), (a3) et (b1) ou d'un mélange de ce type de monomères

et leur polymérisation est continuée, et

(III) lorsque la polymérisation est terminée, la résine polyacrylique ainsi obtenue est neutralisée, au moins en partie, et dispersée dans l'eau, auquel cas le total des parties en poids de (b1) et (b2) est toujours de 100 % en poids et (a1), (a2), (a3), (b1) et (b2) sont sélectionnés de telle sorte et dans une quantité telle que la résine polyacrylique présente un indice d'hydroxyle de 40 à 200, de préférence 60 à 140, un indice d'acide de 20 à 100, de préférence 25 à 50 et une température de transition vitreuse ($T_V$) de -40 °C jusqu'à +60 °C, de préférence -20 °C à +40 °C.

3.  Procédé selon la revendication 1, caractérisé en ce qu'à l'étape (1) une composition d'enduction de fond aqueuse, de préférence contenant des pigments métalliques, est appliquée.

4.  Procédé ou compositions d'enduction selon l'une quelconque des revendications 1 à 3, caractérisés en ce qu'aux étapes (I) et (II), la polymérisation est réalisée à une température de 80 à 160 °C, de préférence 110 à 160 °C, en présence d'au moins un amorceur formant des radicaux libres et que l'étape (I) dure 2 à 8 heures, de préférence 3 à 6 heures et que l'addition du mélange constitué de (b1) et de (b2) est réalisée dans un délai de 10 à 90 minutes, de préférence dans un délai de 30 à 75 minutes.

5.  Procédé ou compositions d'enduction selon l'une quelconque des revendications 1 à 4, caractérisés en ce que, pour la viscosité de vaporisation, la proportion de résine polyacrylique et de résine aminoplastique est de 20 à 45 % en poids, de préférence 32 à 40 % en poids.

6.  Résine polyacrylique diluable à l'eau, caractérisée en ce qu'elle est obtenue par le fait

(I) qu'un mélange composé

(a1) d'un ester (méth)acrylique pratiquement sans groupe carboxyle et copolymérisable avec (a2), (a3), (b1) et (b2) ou d'un mélange de ce type d'esters (méth)acryliques et

(a2) d'un monomère éthylénique et copolymérisable avec (a1), (a3), (b1) et (b2), qui contient au moins un groupe hydroxyle par molécule et est pratiquement sans groupe carboxyle ou d'un mélange de ce type de monomères et le cas échéant

(a3) d'un monomère éthylénique et différent de (a1) et de (a2), pratiquement sans groupe carboxyle et copolymérisable avec (a1), (a2), (b1) et (b2) ou d'un mélange de ce type de monomères,

est ajouté à un solvant organique ou un mélange de solvants organiques et polymérisé en présence d'au moins un amorceur de polymérisation et

(II) après que l'on a ajouté au moins 80 % en poids du mélange composé de (a1), de (a2) et le cas échéant de (a3) et après qu'au moins 80 % en poids du monomère ajouté à l'étape (I) sont mis à réagir

(b1) plus de 25 et jusqu'à moins de 60, de préférence 33 - 50 % en poids d'un monomère éthylénique, contenant au moins un groupe carboxyle par molécule et copolymérisable avec (a1), (a2), (a3) et (b2) ou d'un mélange de ce type de monomères, sont ajoutés en même temps que

(b2) 40 à 75 % en poids d'un monomère éthylénique, sans groupe carboxyle et copolymérisable avec (a1), (a2), (a3) et (b1) ou d'un mélange de ce type de monomères

et leur polymérisation est continuée, et

(III) lorsque la polymérisation est terminée, la résine polyacrylique ainsi obtenue est neutralisée, au moins en partie, et dispersée dans l'eau, auquel cas le total des parties en poids de (b1) et (b2) est toujours de 100 % en poids et (a1), (a2), (a3), (b1) et (b2) sont sélectionnés de telle sorte et dans une quantité telle que la résine polyacrylique présente un indice d'hydroxyle de 40 à 200, de préférence 60 à 140, un indice d'acide de 20 à 100, de préférence 25 à 50 et une température de transition vitreuse ($T_V$) de -40 °C jusqu'à +60 °C, de préférence -20 °C à +40 °C.

7.  Procédé pour la fabrication de résines polyacryliques diluables à l'eau, caractérisé en ce

(I) qu'un mélange composé

(a1) d'un ester (méth)acrylique pratiquement sans groupe carboxyle et copolymérisable avec (a2), (a3), (b1) et (b2) ou d'un mélange de ce type d'esters (méth)acryliques et

(a2) d'un monomère éthylénique et copolymérisable avec (a1), (a3), (b1) et (b2), qui contient au moins un groupe hydroxyle par molécule et est pratiquement sans groupe carboxyle ou d'un mélange de ce type de monomères et le cas échéant

(a3) d'un monomère éthylénique et différent de (a1) et de (a2), pratiquement sans groupe carboxyle et copolymérisable avec (a1), (a2), (b1) et (b2) ou d'un mélange de ce type de monomères,
est ajouté à un solvant organique ou un mélange de solvants organiques et polymérisé en présence
d'au moins un amorceur de polymérisation et

(II) après que l'on a ajouté au moins 80 % en poids du mélange composé de (a1), de (a2) et le cas
échéant de (a3) et après qu'au moins 80 % en poids du monomère ajouté à l'étape (I) sont mis à réagir

    (b1) plus de 25 et jusqu'à moins de 60, de préférence 33 - 50 % en poids d'un monomère éthylénique, contenant au moins un groupe carboxyle par molécule et copolymérisable avec (a1), (a2),
(a3) et (b2) ou d'un mélange de ce type de monomères, sont ajoutés en même temps que

    (b2) 40 à 75 % en poids d'un monomère éthylénique, sans groupe carboxyle et copolymérisable
avec (a1), (a2), (a3) et (b1) ou d'un mélange de ce type de monomères

et leur polymérisation est continuée, et

(III) lorsque la polymérisation est terminée, la résine polyacrylique ainsi obtenue est neutralisée, au
moins en partie, et dispersée dans l'eau, auquel cas le total des parties en poids de (b1) et (b2) est
toujours de 100 % en poids et (a1), (a2), (a3), (b1) et (b2) sont sélectionnés de telle sorte et dans une
quantité telle que la résine polyacrylique présente un indice d'hydroxyle de 40 à 200, de préférence 60
à 140, un indice d'acide de 20 à 100, de préférence 25 à 50 et une température de transition vitreuse
($T_V$) de -40 °C jusqu'à +60 °C, de préférence -20 °C à +40 °C.

8. Résines polyacryliques ou procédé selon l'une quelconque des revendications 6 ou 7, caractérisés en ce
qu'aux étapes (I) et (II), la polymérisation est réalisée à une température de 80 à 160 °C, de préférence
110 à 160 °C, en présence d'au moins un amorceur formant des radicaux libres et que l'étape (I) dure 2
à 8 heures, de préférence 3 à 6 heures et que l'addition du mélange constitué de (b1) et de (b2) est réalisée
dans un délai de 10 à 90 minutes, de préférence dans un délai de 30 à 75 minutes.